# EUROPEAN PATENT SPECIFICATION

(11) **EP 4 172 487 B1**
(45) Date of publication and mention of the grant of the patent: **15.10.2025**
(21) Application number: 21828890.0
(22) Date of filing: 25.06.2021
(51) Int. Cl.: F02D 35/02, F02D 41/28, F02D 45/00, F02P 3/04, F02P 17/00, F02P 17/12, G01L 23/22, G01M 15/11

(54) **EVENT DETECTION SYSTEM**
EREIGNISDETEKTIONSSYSTEM
SYSTÈME DE DÉTECTION D'ÉVÉNEMENT

(30) Priority: 25.06.2020 IN 202041027089
(43) Date of publication of application: 03.05.2023
(73) Proprietor: TVS Motor Company Limited, 600006 Chennai (IN)
(72) Inventor: JAYPRAKASH BAGADE, Monika, Chennai, 600 006 (IN); BHUSHAN DAS, Himadri, Chennai, 600 006 (IN); RAVEENDRANATH, Arjun, Chennai, 600 006 (IN); MANDLOI, Deepak, Chennai, 600 006 (IN); SAMRAJ JABEZ, DHINAGAR, Chennai, 600 006 (IN)
(74) Representative: Patentanwaltskanzlei Matschnig & Forsthuber OG
(86) International application number: PCT/IB2021/020031
(87) International publication number: WO 2021/260444

(56) References cited:
- WO-A1-2019/049446
- US-A1- 2002 033 041
- US-A1- 2003 197 511
- US-A1- 2005 241 369
- US-A1- 2011 088 646
- US-A1- 2012 286 791
- US-B1- 6 246 952
- TAMER BADAWY ET AL: "Detection of Combustion Resonance Using an Ion Current Sensor in Diesel Engines", ASME 2011 INTERNAL COMBUSTION ENGINE DIVISION FALL TECHNICAL CONFERENCE; MORGANTOWN, WEST VIRGINIA, USA; OCTOBER 2-5, 2011, ASME, NEW YORK, US, vol. ICEF2011-60068, 2 October 2011 (2011-10-02), pages 755 - 763, XP008180078, ISBN: 978-0-7918-4442-7
- JERZY MERKISZ ET AL: "Overview of engine misfires detection methods used in on board diagnostics", JOURNAL OF KONES. COMBUSTION ENGINES, vol. 8, no. 1-2, 1 January 2001 (2001-01-01), pages 326 - 341, XP055047849

## Description

### TECHNICAL FIELD

The present subject matter relates to spark ignition engines. More particularly, detection of occurrence of an event in a spark ignition engine.

### BACKGROUND

Internal Combustion (IC) engines are significantly contributing to pollution and global warming by emitting various exhaust gases into the environment. An IC engine produces power by burning of a fossil fuel that emits harmful gases, such as, CO, HC, NOx and hydrocarbons. The emission of gases has been and is deteriorating the environmental condition and thus there is an imminent need for automobile manufacturers to try and reduce the extent of emissions from an IC engine powertrain to previously unimagined levels.

In addition to the control cum reduction of emission of gases, the Automobile industry is moving rapidly towards implementing "On board diagnostic (OBD)" on vehicles for intimating user about the status of vehicle conditions. OBD system is subdivided in multiple categories based on the regime in different countries, e.g. OBD phase I & OBD phase II. Typically, OBD II focuses on three main aspects - Engine misfire detection, Catalytic convertor monitoring, and Lambda sensor monitoring. However, this may vary from one jurisdiction to other depending on the definition by local bodies.

To improve engine combustion efficiency & reduce emissions, it is essential to detect and monitor events, such as, misfire, knocking, etc., in an IC engine. Misfire occurs when the injected air fuel mixture does not burn at all or partially burns. Misfiring of the IC engine affects the quality of combustion and degrades the performance of a catalyst convertor, thereby leading to increase in emissions as well as drop in durability of the system, which is undesirable. Misfire detection systems and methods are known from the following publications : US 2005/241369 A1, US 6 246 952 B1 or WO 2019/049446 A1.

### BRIEF DESCRIPTION OF DRAWINGS

The detailed description is described with reference to the accompanying figures. The same numbers are used throughout the drawings to reference like features and components.
Fig. 1 exemplarily illustrates an ignition system with an ion current measurement circuit of an engine;
Fig. 2 exemplarily illustrates an event detection system electrically coupled to the ignition system exemplarily illustrated in Fig. 1;
Fig. 3 exemplarily illustrates a graphical representation of variation in the ion current signal, measured by the ion current measurement circuit, with respect to time;
Figs. 4-5 exemplarily illustrate graphical representations of the ion current signal in misfire condition and No-misfire condition, in frequency domain;
Fig. 6 exemplarily illustrates a schematic diagram showing the determination of occurrence of the misfire from the ion current signal, based on the number of frequency bands determined by the frequency band determination unit;
Figs. 7-9 exemplarily illustrate graphical representation of the variation in the digital ion current signal in different frequency bands, during misfire condition and no-misfire condition;
Fig. 10 exemplarily illustrates a flowchart showing a method comprising steps for determining occurrence of a misfire in an internal combustion engine;
Fig. 11 exemplarily illustrates a flow chart comprising steps of determining the occurrence of misfire in the engine; and
Fig. 12 exemplarily illustrates a flow chart comprising steps of determining the occurrence of misfire in the engine.

### DETAILED DESCRIPTION OF THE INVENTION

Misfire events in an Internal Combustion (IC) engine can be categorized as partial or complete, based on the amount of combustion occurring during a particular engine cycle. In most engines, identification of misfire is performed by monitoring angular acceleration of engine crank-shaft. Any misfire results in momentary change in the angular acceleration of the crankshaft which is sensed to determine occurrence of a misfire event. However, single cylinder engines with lower capacity (e.g. capacity less than 200 cubic centimeter) provide challenges to detect misfire owing to low mechanical inertia of the IC engine using, when the same approach of angular acceleration is used. The problem of misfire identification for the single cylinder IC engines turns out to be additionally challenging due to presence of various load disturbances on the power train especially when the engine is employed in a vehicle.

Several other techniques are designed for the detection of engine misfire for the single cylinder engines. Such techniques include analysis of instantaneous crankshaft speed, analysis of in-cylinder pressure, analysis of instantaneous crankshaft torque, etc. Evaluation of the crankshaft speed for detection of misfire faces a lot of challenges due to low mechanical inertial and load disturbances in engines. These aspects adversely impact the reliability with which the engine misfire is detected. Alternate solutions, to address the problem of detection of misfire event in the engine, utilize ion current generated in a sparking event in the engine. When air-fuel mixture ignites inside the IC engine cylinder, air particles get ionized. By applying a suitable high-voltage on a spark plug, it is possible to measure the ion current as the amount of ion current reflects the level of ionization of the air-fuel mixture. Thus, the flow of ion current depends on the combustion event. The ion current signal can be captured with the help of an ion current measurement circuit. The captured signal needs to be processed to detect a misfire. Multiple techniques can be applied to differentiate the misfire from normal combustion with the help of the ion current signal.

An integral of the ion current signal is a common technique to detect misfire. However, the integral of ion current signal shows error for partial misfire as the value of integral coincides for misfire and No-misfire condition. There are various reasons which can result in engine misfires. Electrical failure in the ignition coil circuit is one of them. No flow of ion current in the ignition coil helps to detect a complete misfire. However, in cases where a feeble spark is generated across the spark plug resulting in a partial misfire, the detection using the ion current signal demands for filtering and processing the ion current signal to extract the information.

In application of the IC engine on vehicles, following are the disadvantages of occurrence of a misfire condition: Due to the occurrence of misfire in a combustion event, fuel will be wasted as there is no spark for fuel to burn. This will degrade the performance of the vehicle due to reduction in mileage. Misfire detection will intimate driver about the misfire events in the vehicle and by investigating and rectifying the causes of misfire, the user can improve the performance of vehicle. Detection and reduction of misfire will have an impact on the durability of vehicle. Further, misfire has direct impact on power/pick up of vehicle as there is loss of combustion event. The user may feel a sudden jerk in driving due to misfire. These may cause discomfort to the user of the vehicle. Also, due to misfire, the unburnt fuel in the exhaust affects the life of the catalyst in the converter and has direct impact on emissions. Therefore, there exists a need for detecting events, such as, no-misfires, complete misfires, and partial misfires effectively based on ion current sensing in engines for smooth experience, durability, and adherence to emission norms by the engine.

The present subject matter discloses a method of configuring magnitude and shape of ion current signal generated during a sparking event in an engine for information about a misfire (complete or partial) event in the engine. Thus, the ion current measurement is indicative of the combustion event as well as the quality of combustion in the engine. The measured ion current signal is configured to display dynamics in no-misfire condition compared to that of a misfire condition. Frequency spectrum of the ion current signal is used to extract the essential information and to differentiate between the no-misfire condition and the misfire condition in the engine.

In an embodiment, an event detection system of an engine is disclosed that comprises an ion current measurement circuit, a predetermined number of frequency band limiter modules, a predetermined number of frequency domain conversion units, and an ion signal analyzer. The ion current measurement circuit measures an ion current signal in an ignition coil generated during a spark event in a spark plug. The predetermined number of frequency band limiter modules, communicatively coupled to the ion current measurement circuit, generate a predetermined number of band filtered ion current signals. The predetermined number of frequency domain conversion units, communicatively coupled to the predetermined number of frequency band limiter modules, converts the predetermined number of band filtered ion current signals to a predetermined number of digital ion current signals in frequency domain. The ion signal analyzer, communicatively coupled to the predetermined number of frequency domain conversion units, analyzes and compares an amplitude of each of the predetermined number of digital ion current signals with an amplitude threshold of each of the predetermined number of digital ion current signals to determine occurrence of an event in the engine.

In an embodiment, the event detection system further comprises a frequency band determination unit for determining a predetermined number of frequency bands in the measured ion current signal based on variation in voltage levels of the measured ion current signal. Each of the predetermined number of frequency bands corresponds to each of the predetermined number of frequency band limiter modules. Each of the predetermined number of frequency band limiter modules corresponds to each of the predetermined number of band filtered ion current signals. Each of the predetermined number of band filtered ion current signals corresponds to each of the predetermined number of digital ion current signals. In an embodiment, the predetermined number of frequency bands is three. Each of the predetermined number of frequency band limiter modules is a bandpass filter with a corresponding low cut-off frequency and a corresponding high cut-off frequency.

Each of the predetermined frequency domain conversion units perform Fourier Transformation of each of the predetermined number of band filtered ion current signals in time domain to obtain each of the predetermined number of digital ion current signals in frequency domain. The Fourier Transformation is an FFT algorithm applied on each of the predetermined number of band filtered ion current signals.

In an embodiment, the event detection system further comprises a notification unit for generating and notifying a user of the engine on occurrence of the event, based on a comparative analysis of the amplitude of each of the predetermined number of digital ion current signals by the ion signal analyzer against a prestored amplitude threshold. In an embodiment, the event detection system further comprises an amplitude database server for storing amplitude thresholds corresponding to frequency bands in the measured ion current signal.

In another embodiment, a method for determining occurrence of an event in an internal combustion engine is disclosed. The method is implemented by the event detection system disclosed above. The method comprises the steps of: measuring voltage levels of an ion current signal received from an ignition coil of the IC engine, during a sparking event in a spark plug, by the ion current measurement circuit. Further, the step of filtering the received ion current signal, by the predetermined number of frequency band limiter modules, to generate a predetermined number of band filtered ion current signals is disclosed. Further, the method comprises the steps of converting the predetermined number of band filtered ion current signals to a predetermined number of digital ion current signals in frequency domain by the predetermined number of frequency domain conversion units; and analysing an amplitude of each of the predetermined number of digital ion current signals with an amplitude threshold corresponding to a frequency band of each of the predetermined number of digital ion current signals, by the ion signal analyzer, to consequentially determine occurrence of the event in the engine.

The method further comprises determining a predetermined number of frequency bands in the measured ion current signal based on variation in voltage levels of the measured ion current signal and storing the amplitude thresholds in an amplitude threshold server (205) by a frequency band determination unit of the event detection system. The conversion of the predetermined number of band filtered ion current signals in time domain to frequency domain comprises performing Fourier Transformation of each of the predetermined number of band filtered ion current signals. The Fourier Transformation is a Fast Fourier Transform (FFT) algorithm applied on each of the predetermined number of band filtered ion current signals.

In an embodiment, analyzing an amplitude of each of the predetermined number of digital ion current signals by the ion signal analyzer comprises: determining corresponding frequency band of each of the predetermined number of digital ion current signals, performing a lookup for the amplitude threshold, corresponding to the determined frequency band of each of the predetermined number of digital ion current signals, in an amplitude database server, comparing the amplitude of each of the predetermined number of digital ion current signals with the corresponding amplitude threshold, and determining the occurrence of the event in the engine based on the comparison. The method further comprises generating and notifying a user of the engine on the occurrence of the event by a notification unit of the event detection system, based on the comparative analysis by the ion signal analyzer. The method ffurther comprises the step of storing event fault information history in an electronic control unit for engine diagnostic analysis. The method utilises FFT and bandpass filters for identification of events, such as, misfires as well as partial misfires in the engines.

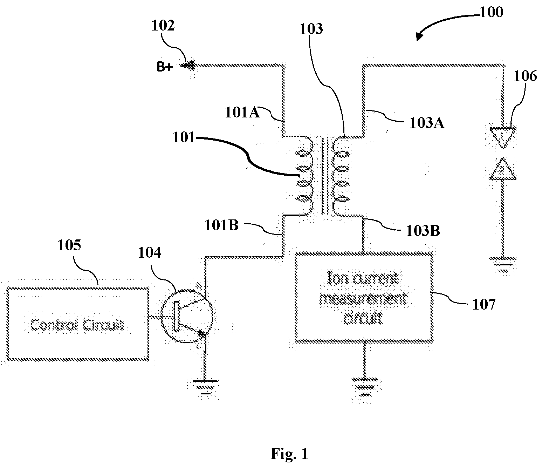

Fig. 1 exemplarily illustrates an ignition system 100 with an ion current measurement circuit 107 of an engine. The ignition system 100 consists of an ignition coil with a primary side 101 and secondary side 103, a spark plug 106, and a control circuit 105, for example, an electronic control unit (ECU) with an electrical switching device 104 to produce a high voltage spike required to generate a spark in a cylinder of the engine. The primary coil 101 is connected between a battery 102 and the electrical switching device 104. When the electrical switching device 104 is in a closed state, the primary side 101 of the ignition coil stores energy. As soon as the control circuit 105 changes the state of the electrical switching device 104 to open, a voltage e.g. 400V is generated in the primary side 101 of the ignition coil due to the sudden interruption of current flow in the primary side 101. A secondary high voltage of around 20-25 kV (depending upon the turn ratio of primary & secondary coils) is generated at the spark plug 106, which results into voltage breakdown and thus allows the flow of ion current across the spark plug 106. The ion current measurement circuit 107 is connected at the secondary side 103 to provide a biasing voltage which in turn generates the flow of ion current. The ion current measurement circuit 107 consists of a capacitor which is charged during trigger of the spark. Once the spark is triggered, the charge held by the capacitor generates a potential difference across the spark electrodes, which results in flow of the ion current. The ion current measurement circuit 107 is connected to a terminal 103B of the secondary side 103 of the ignition coil to detect misfire. The captured ion current signal needs to be filtered and processed to extract the essential information pertaining to combustion event in the engine.

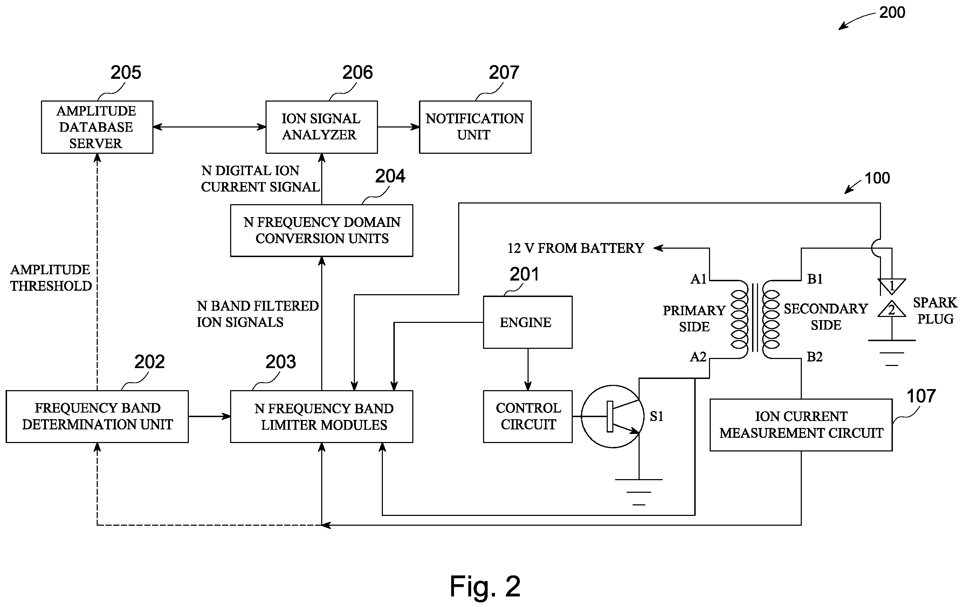

Fig. 2 exemplarily illustrates an event detection system 200 electrically coupled to the ignition system 100 exemplarily illustrated in Fig. 1. The event detection system 200 comprises the ion current measurement circuit 107 connected to the secondary side 103 of the ignition coil, N frequency band limiter modules 203, N frequency domain conversion units 204, and an ion signal analyzer 206. The number N is a predetermined number varying between 1 to Infinity. The event detection system 200 comprises a frequency band determination unit 202 that is electrically coupled with the ion current measurement circuit 107.

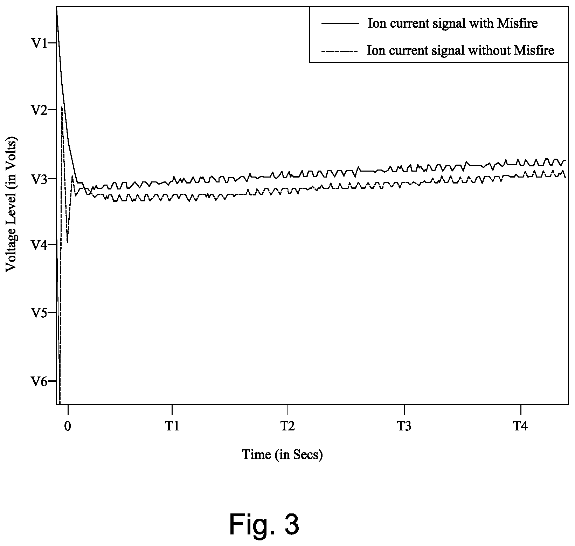

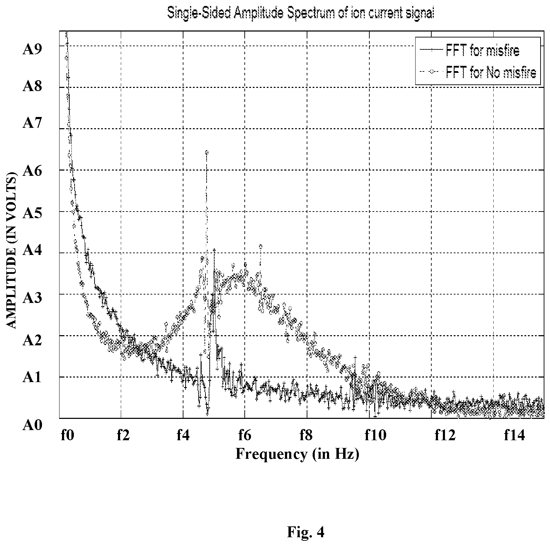

The ion current measurement circuit 107 measures the ion current signal flowing through the secondary side of the ignition coil. The ion current measurement circuit 107 measures the voltage level of the ion current signal. The variation in the voltage levels of the ion current signal during a misfire event and a no-misfire event is shown in Fig. 3. Based on the variation in the voltage levels of the ion current signal with respect to time, the frequency band determination unit 202 determines number of frequency bands N, low cut-off frequency, and high cut-off frequency of each of the N frequency bands. When the ion current signal exemplarily illustrated in Fig. 3 is converted to frequency domain as exemplarily illustrated in Fig. 4, the frequency band determination unit 202 determines a low cut-off frequency and a high cut-off frequency for the entire ion current signal in frequency domain, where there is a predetermined amount of variation in amplitudes of the ion current signal during both misfire condition and no-misfire condition. Based on the variation in the amplitudes of the ion current signal in frequency domain signal, the frequency band determination unit identifies N number of frequency bands, each with a low cut-off frequency and a high cut-off frequency as disclosed in the description of Figs. 3-4.

The number of frequency band limiter modules is N which is equal to the number of frequency bands (N) determined by the frequency band determination unit 202. The N frequency band limiter modules 203 filter the ion current signal and generate N number of band filtered ion current signals. Each of the frequency band limiter modules 203 is, for example, a bandpass filter operating in a frequency band. Each frequency band is defined with a low cut-off frequency and a high cut-off frequency. Each of the frequency band limiter modules filters the ion current signal between the low cut-off frequency and the high cut-off frequency of that frequency band. Each frequency band limiter module outputs a band filtered ion current signal. Each frequency band limiter module utilizes voltage at the secondary side of the ignition coil, voltage at the primary side of the ignition coil, and engine speed as a reference, for filtering the ion current signal. Predetermined engine speeds are used to trigger the start and end of the detection of the misfire by the event detection system. Between the engine speeds, the ion current signal filtering and processing is carried out by the event detection system. The detection of the misfire is performed in real-time continuously, since no data is stored for later processing.

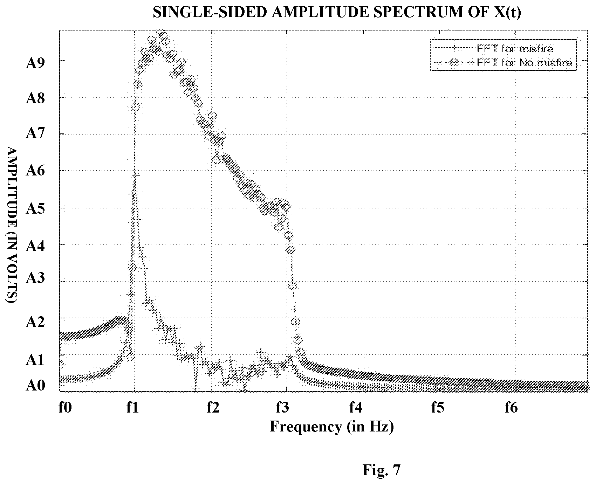

Each of the N frequency domain conversion units 204 acts on a band filtered ion current signal out of the N number of band filtered signals. The N frequency domain conversion units 204 convert the N band filtered ion current signals in time domain to frequency domain, since the frequency spectrum of the ion current signal provides information on the combustion event. The N frequency domain conversion units 204 generate N digital ion current signals. Each digital ion current signal comprises multiple frequency components with corresponding amplitudes as will be disclosed in the detailed description of Figs. 7-9. The frequency domain conversion unit 204 performs FFT on the band filtered ion current signal and obtains a digital ion current signal which is sent to the ion signal analyzer 206. The ion signal analyzer 206 analyzes the amplitudes of the frequency components constituting the FFT spectrum of the band filtered digital ion current signal to detect occurrence of misfire. The ion signal analyzer 206 analyzes the amplitudes of each of the frequency components of each digital ion current signal with an amplitude threshold corresponding to the digital ion current signals. The amplitude thresholds are stored in an amplitude database server 205. The amplitude thresholds correspond to the frequency bands of the ion current signal received by the ion current measurement circuit 107. Simultaneous to the determination of number of frequency bands by the frequency band determination unit 202, the amplitude database server 205 is populated with the amplitude thresholds corresponding to the frequency bands obtained based on experimental studies or theoretical computations which correspond to misfire of the engine.

The ion signal analyzer 206 determines the corresponding frequency band of each of the predetermined number of digital ion current signals and performs a lookup for the corresponding amplitude threshold AT in the amplitude database in the amplitude database server 205. Further, the ion signal analyzer 206 compares the amplitude A of the frequency components of each of the predetermined number of digital ion current signals (DICS) with the corresponding amplitude threshold and determines the occurrence of the misfire in the engine 201 based on the comparison. In an embodiment, the ion analyzer 206 may set a misfire flag and a no-misfire flag based on the analysis.

The event detection system 200 further comprises a notification unit 207 for generating and notifying a user of the engine 201 on occurrence of the misfire, based on the analysis by the ion signal analyzer 206. Based on the misfire flag and the no-misfire flag, the notification unit 207 sends a notification to a user device of the user. The user device may be a smart phone, a desktop, a laptop, an instrument cluster of the vehicle, etc. The notification may be a voice alert, a text notification communicating an error code and the related information on the identified fault to the user. As per an alternate embodiment, the alert or misfire fault information history may be stored in the electronic control unit (ECU) 105 or any storage unit. The notification or stored history may later on be used for diagnosis and rectification of the fault by a service engineer.

Fig. 3 exemplarily illustrates a graphical representation of variation in the ion current signal, measured by the ion current measurement circuit 107, with respect to time. As can be seen, the voltage levels of the ion current signal exhibits dynamic voltage variation of signal pattern (amplitude and frequency) at the initiation of the misfire condition as compared to the no-misfire condition. The variation in the voltage levels are analyzed by other components of the event detection system 200 discussed in detailed description of Fig. 2 to determine occurrence of the misfire. The frequency band determination unit 202 performs Fourier transformation on the ion current signal illustrated in Fig. 3 without using bandpass filters to identify the number of frequency bands, the high cut-off frequency and the low cut-off frequency of each frequency band.

Figs. 4-5 exemplarily illustrate graphical representations of the ion current signal in misfire condition and no-misfire condition, in frequency domain. As exemplarily illustrated in Fig. 4, the ion current signal in frequency domain is obtained on performing Fourier transformation of the ion current signal exemplarily illustrated in Fig. 3 by the frequency band determination unit 202. The graphical representation shows variation in the amplitudes of the frequency components of the ion current signal in the range f2 Hz to f8 Hz, during misfire condition and no-misfire condition. The frequencies vary from f0 Hz, f1 Hz, f2 Hz, ...to.., f13 Hz, f14 Hz. f2 Hz is 2 times of f1 Hz, f3 is 3 times of f1 Hz,...., f14 is 14 times of f1 Hz. The amplitude of the frequency components varies from A0, A1, A2, ..., to A9, where A2 is 2 times of A1, A3 is 3 times of A1,...., A9 is 9 times of A1.

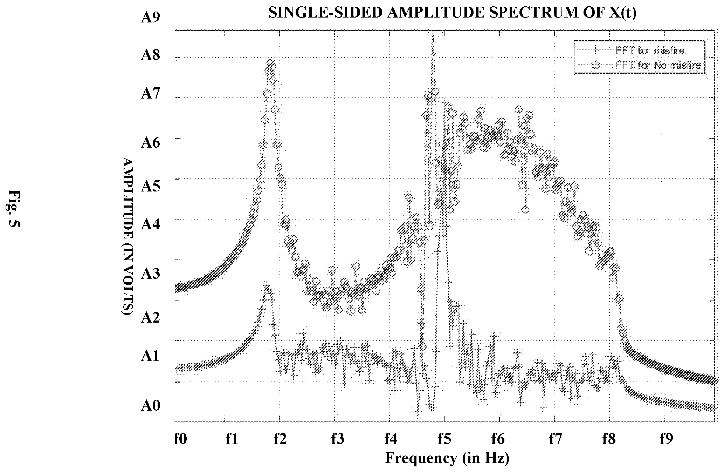

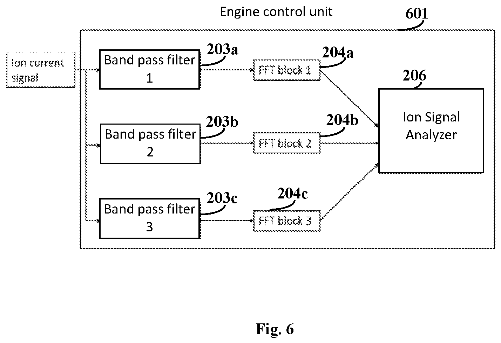

From this graphical representation, it is evident that the ion current signal comprises noise due to vibration and engine dynamics and to remove the induced noise, filters are to be used. Using a single frequency band limiter module with high cut-off frequency f8 Hz and low cut-off frequency f2 Hz, the graphical representation of the ion current signal in frequency domain, illustrated in Fig. 5, is obtained. As exemplarily illustrated in Fig. 5, between the frequencies the f2 Hz and f8 Hz, the variation in the amplitudes of the frequency components is different in different frequency bands. Based on the variation in the amplitudes of the frequency components, the frequency band determination unit 202 determines N number of frequency bands, and the high cut-off frequency and low cut-off frequency for each frequency band. Exemplarily, from the graphical representation of Fig. 5, the frequency band determination unit 202 determines three frequency bands and the high cut-off frequency and low cut-off frequency for each of them. The bandpass filter 1 has a low cut-off frequency of f1 Hz and high cut-off frequency of f3 Hz. The bandpass filter 2 has a low cut-off frequency of f3 Hz and a high cut-off frequency of f5 Hz. The bandpass filter 3 has a low cut-off frequency of f5 Hz and a high cut-off frequency of f7 Hz. Since N=3 i.e. three frequency bands are identified, the number of frequency band limiter modules 203 are also three and the frequency domain conversion units 204 are also three as exemplarily illustrated in Fig. 6.

Fig. 6 exemplarily illustrates a schematic diagram showing the determination of occurrence of the misfire from the ion current signal, based on the number of frequency bands determined by the frequency band determination unit 202. As disclosed in above example, there are three frequency band limiter modules 203a, 203b, and 203c, each with a high cut-off frequency and a low cut-off frequency. The frequency band limiter modules are bandpass filters. The bandpass filter 1 203a has a low cut-off frequency of f1 Hz and high cut-off frequency of f3 Hz. The bandpass filter 2 203b has a low cut-off frequency of f3 Hz and a high cut-off frequency of f5 Hz. The bandpass filter 3 203c has a low cut-off frequency of f5 Hz and a high cut-off frequency of f7 Hz. The frequency band determination unit 202 selects the low cut-off frequency and the high cut-off frequency such that the ion current signal shows significant variation during misfire and No-misfire condition between these two frequencies. Each bandpass filter 203a, 203b, and 203c generates a band filtered ion current signal. The band filtered ion current signal in time domain is converted to frequency domain using Fourier transformation. Fast Fourier Transform (FFT) is then applied to the band filtered signal after each bandpass filter block. The three FFT blocks 204a, 204b, and 204c perform FFT and generate three digital ion current signals. From the frequency spectrum of the digital ion current signal, the ion signal analyzer 206 can detect the misfire in each frequency band by comparing with an appropriate predetermined threshold from experimental studies, as will be disclosed further. In an embodiment, the frequency band limiter modules 203, the frequency domain conversion units 204, and the ion signal analyzer 206 are embodied as software modules in the Engine/Electronic Control Unit 105.

Figs. 7-9 exemplarily illustrate graphical representation of the variation in the digital ion current signal in different frequency bands, during misfire condition and No-misfire condition. It is observed from the frequency spectra in Figs. 7-9 that FFT of each band filtered ion current signal shows variation in misfire and No-misfire condition The digital ion current signal exemplarily illustrated in Fig. 7 is generated from a combination of the bandpass filter 1 203a and the FFT block 1 204a and lies between a low cut-off frequency of f1 Hz and high cut-off frequency of f3 Hz. It can be observed that the amplitude of the frequency components of the digital ion current signal in Fig. 7 is above A9 at approximately f1 Hz and the amplitude of the frequency components is above A4 from f1 Hz to f3 Hz for No-misfire condition. However, the amplitude of the frequency components is below A7 at approximately f1 Hz and the amplitude of the frequency components is below A2 beyond f1 Hz to f3 Hz for misfire condition. Based on the amplitudes of the frequency components in the frequency band f1 Hz to f3 Hz, the frequency band determination unit 202 determines amplitude thresholds and stores the amplitude thresholds corresponding to the frequencies in the amplitude database server 205 for further use by the ion signal analyzer 206.

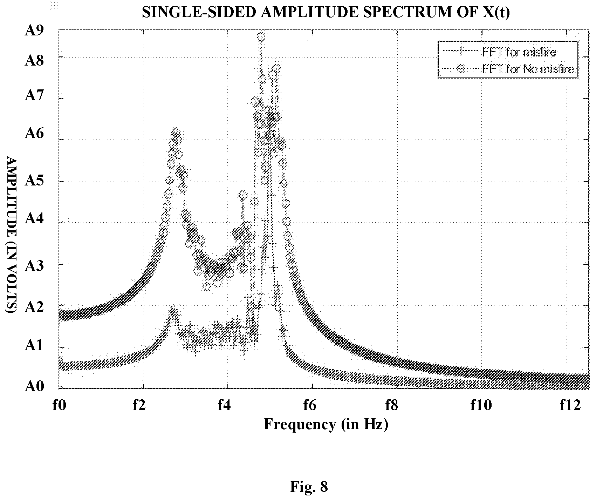

The digital ion current signal exemplarily illustrated in Fig. 8 is generated from a combination of the bandpass filter 2 203b and the FFT block 2 204b and lies between a low cut-off frequency of f3 Hz and a high cut-off frequency of f5 Hz. It can be observed that the peak amplitude of the frequency components is greater than A7 between f4 Hz and f6 Hz for No-misfire condition, whereas the peak amplitude of the frequency components is varying from A6 to A8 between f4 Hz to f6 Hz for misfire condition. Sometimes two digital ion current signals for the misfire condition and the No-misfire condition are coinciding at same frequency and the amplitude band is overlapping from A6 to A8. However, there are multiple peaks in No-misfire condition with amplitude greater than A8 but there is only single peak in misfire condition. Based on the amplitudes of the frequency components in the frequency band f3 Hz to f5 Hz, the frequency band determination unit 202 determines amplitude thresholds and stores the amplitude thresholds corresponding to the frequencies in the amplitude database server 205 for further use by the ion signal analyzer 206.

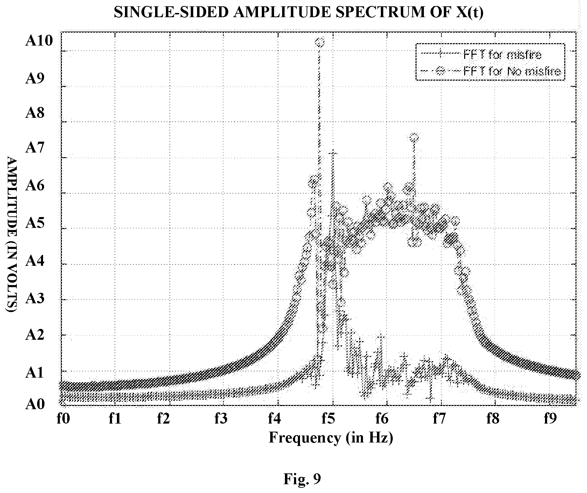

The digital ion current signal exemplarily illustrated in Fig. 9 is generated from a combination of the bandpass filter 3 203c and the FFT block 3 204c and lies between a low cut-off frequency of f5 Hz and high cut-off frequency of f7 Hz. It can be observed that the amplitude of the frequency components is above A4 for all frequencies varying from f5 Hz to f7 Hz for No-misfire condition, whereas the amplitude is below A4 for all frequencies varying from f5 Hz to f7 Hz for misfire condition. Based on the amplitudes of the frequency components in the frequency band f5 Hz to f7 Hz, the frequency band determination unit 202 determines amplitude thresholds and stores the amplitude thresholds corresponding to the frequencies in the amplitude database unit 205 for further use by the ion signal analyzer 206.

The frequency band determination unit 202 determines the amplitude thresholds for No-misfire condition for the digital ion current signal in Fig. 9 to be above A9 at approximately f1 Hz and above A4 from f1 Hz to f3 Hz. The amplitude thresholds for the misfire condition are below A7 at approximately f1 Hz and below A2 beyond f1 Hz to f3 Hz. The frequency band determination unit 202 determines the amplitude thresholds for No-misfire condition to be multiple frequency components with amplitude above A7 in the frequency band f3 Hz to f5 Hz. The amplitude threshold for the misfire condition is no multiple frequency components with amplitude above A7 in the frequency band f3 Hz to f5 Hz. The frequency band determination unit 202 determines the amplitude threshold for No-misfire condition to be above A4 for all frequencies varying from f5 Hz to f7 Hz. The amplitude threshold for the misfire condition is to be below A4 for all frequencies varying from f5 Hz to f7 Hz in the frequency band f5 Hz to f7 Hz. These amplitude thresholds corresponding to the frequencies are stored in the amplitude database server 205.

When an ion current signal is received from the ion current measurement circuit 107, the 3 frequency band limiter modules 203a, 203b, 203c generate 3 band filtered ion current signals and the 3 frequency conversion units 204a, 204b, 204c generate the 3 digital ion current signals. Each digital ion current signal belonging to a frequency band is examined by the ion signal analyzer 206 to determine occurrence of misfire. For a digital ion current signal from a specific frequency band, the ion analyzer 206 compares the amplitudes of the frequency components in the digital ion current signal with the amplitude thresholds corresponding to the frequencies pre-stored in the amplitude database of the amplitude database server 205. On comparing with the amplitudes of the frequency components with the amplitude thresholds, the ion signal analyzer 206 may detect the occurrence of the misfire and activates the misfire flag as exemplarily illustrated in Fig. 6. Based on the misfire flag, the notification unit 207 generates a notification to notify the occurrence of the misfire to the user of the engine 201.

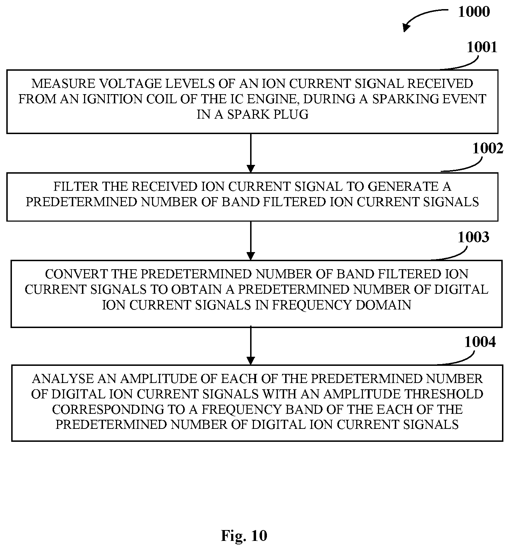

Fig. 10 exemplarily illustrates a flowchart showing a method comprising steps for determining occurrence of a misfire in an internal combustion engine 201. The method is implemented by the event detection system 200 exemplarily illustrated in Fig. 2. At step 1001, the ion current measurement circuit 107 measures voltage levels of an ion current signal received from an ignition coil 101 and 103 of the IC engine 201, during a sparking event in a spark plug 106. At step 1002, the frequency band limiter modules 203 filter the received ion current signal to generate a predetermined number of band filtered ion current signals. At step 1003, the frequency domain conversion units 204 convert the predetermined number of band filtered ion current signals in time domain to a predetermined number of digital ion current signals in frequency domain. At step 1004, the ion signal analyzer 206 analyzes amplitude of each of the predetermined number of digital ion current signals with an amplitude threshold corresponding to a frequency band of each of the predetermined number of digital ion current signals stored in the amplitude database server 205. Based on the analysis, the ion signal analyzer 206 generates a misfire flag that indicates occurrence of the misfire in the engine 201.

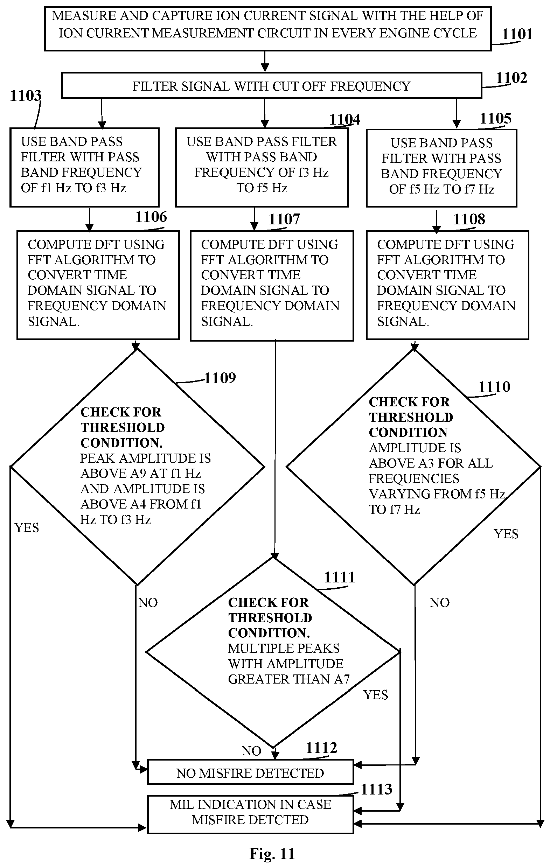

Fig. 11 exemplarily illustrates a flow chart comprising steps of determining the occurrence of misfire in the engine 201. At step 1101, the ion current measurement circuit 107 measures and captures or stores ion current signal in every engine cycle. At step 1102, the ion current signal is filtered with a cut-off frequency to remove noise components in higher frequencies such as f12-f16 Hz in Fig. 3. At step 1103, the bandpass filter 1 203a with a frequency band of f1 to f3 Hz is used. At step 1104, the bandpass filter 2 203b with a frequency band of f3 to f5 Hz is used. At step 1105, the bandpass filter 3 203c with a frequency band of f5 to f7 Hz is used. The ion current signal is passed through the bandpass filter 1 203a, the bandpass filter 2 203b, and the bandpass filter 3 203c. For each band filtered ion current signal, Digital Fourier Transform (DFT) is computed using FFT algorithm to convert the time domain band filtered ion current signal to frequency domain digital ion current signal at the steps 1106, 1107, and 1108 respectively. The ion signal analyzer 206 performs comparison check for threshold condition of each digital ion current signal. The amplitude thresholds are determined from the Figs. 7-9 as disclosed in the detailed description above. At step 1109, the digital ion current signal in the frequency band f1 Hz to f3 Hz is checked if the peak amplitude of the frequency components of the digital ion current signal is above A9 at f1 Hz and above A4 from f1 Hz to f3 Hz. If yes, the occurrence of misfire is confirmed to have been detected by the ion signal analyzer 206 and a malfunction indicator lamp (MIL) indication is generated by the notification unit 207 at step 1113. If No, the ion signal analyzer 206 confirms that No-misfire is detected at step 1112.

At step 1110, the digital ion current signal in the frequency band f5 Hz to f7 Hz is checked if the amplitude of the frequency components of the digital ion current signal is above A3 from f5 Hz to f7 Hz. If yes, occurrence of the misfire is confirmed to have been detected by the ion signal analyzer 206 and a MIL indication is generated by the notification unit 207 at step 1113. If answer to amplitude comparison is No, the ion signal analyzer 206 confirms that No-misfire is detected at step 1112. At step 1111, the digital ion current signal in the frequency band f3 Hz to f5 Hz is checked if there are multiple peaks with amplitude greater than A7 from f3 Hz to f5 Hz. If answer to amplitude comparison is yes, the misfire is detected by the ion signal analyzer 206 and a MIL indication is generated by the notification unit 207 at step 1113. If answer to amplitude comparison is No, the ion signal analyzer 206 detects that No-misfire is detected at step 1112.

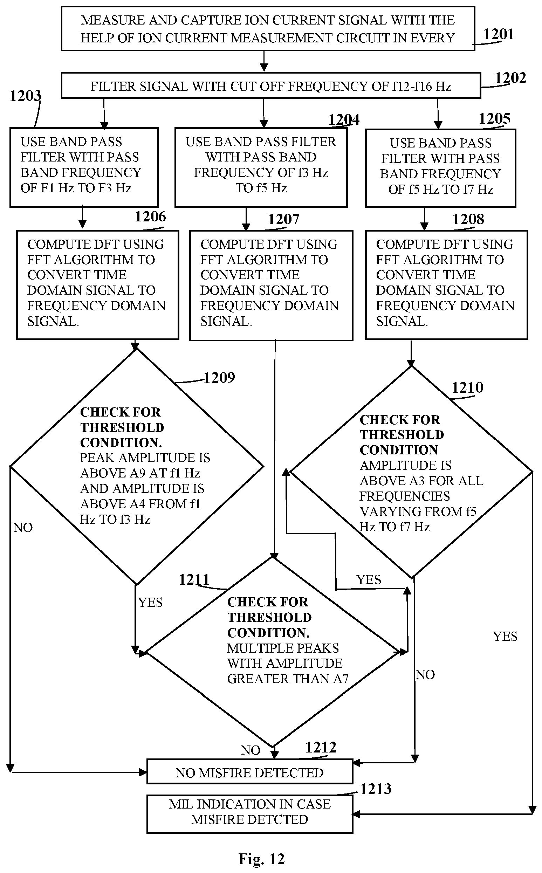

In this method, the misfire is detected if any of the band filtered ion current signal satisfies the threshold condition. However, to improve accuracy of the method of determining occurrence of a misfire, the misfire may be detected if and only if the threshold condition is satisfied in all the three frequency bands (N), as exemplarily illustrated in Fig. 12.

Fig. 12 exemplarily illustrates a flow chart comprising steps of determining the occurrence of misfire in the engine 201. At step 1201, the ion current measurement circuit 107 ensures and captures ion current signal in every engine cycle. At step 1202, the ion current signal is filtered with a cut-off frequency to remove noise components in higher frequencies such as f12-f16 Hz in Fig. 3. At step 1203, the bandpass filter 1 203a with a frequency band of f1 to f3 Hz is used. At step 1204, the bandpass filter 2 203b with a frequency band of f3 to f5 Hz is used. At step 1205, the bandpass filter 3 203c with a frequency band of f5 to f7 Hz is used. The ion current signal is passed through the bandpass filter 1 203a, the bandpass filter 2 203b, and the bandpass filter 3 203c. For each band filtered ion current signal, DFT is computed using FFT algorithm to convert the time domain band filtered ion current signal to frequency domain digital ion current signal at the steps 1206, 1207, and 1208 respectively. The ion signal analyzer 206 performs check for threshold condition of each digital ion current signal. The amplitude thresholds are determined from the Figs. 7-9 and are disclosed in the detailed description above. At step 1209, the digital ion current signal in the frequency band f1 Hz to f3 Hz is checked and compared if the peak amplitude of the frequency components of the digital ion current signal is above A9 at f1 Hz and above A4 from f1 Hz to f3 Hz. If yes, the threshold condition for the frequency band f3 Hz to f5 Hz in step 1211 is examined by the ion signal analyzer 206. If condition in step 1209 is No, the ion signal analyzer 206 determines and infers that No-misfire is detected at step 1212.

At step 1211, the digital ion current signal in the frequency band f3 Hz to f5 Hz is checked and compared if there are multiple peaks with amplitude greater than A7 from f3 Hz to f5 Hz. If condition in step 1211 is yes, the threshold condition for the frequency band f5 Hz to f7 Hz in step 1210 is examined by the ion signal analyzer 206. If condition in step 1211 is No, the ion signal analyzer 206 detects that No-misfire is detected at step 1212. Thus, if the condition in step 1209 is yes and the condition in step 1211 is no, the ion signal analyzer 206 determines and infers that No-misfire is detected at step 1212. At step 1210, the digital ion current signal in the frequency band f5 Hz to f7 Hz is checked and compared if the amplitude of the frequency components of the digital ion current signal is above A3 from f5 Hz to f7 Hz. If condition in step 1210 is yes, the misfire is detected by the ion signal analyzer 206 and a MIL indication is generated by the notification unit 207 at step 1213. If condition in step 1210 is No, the ion signal analyzer 206 detects that No-misfire is detected at step 1212. Thus, if the condition in step 1211 is yes and the condition in step 1210 is no, the ion signal analyzer 206 determines and infers that No-misfire is detected at step 1212.

The prevent invention provides the following technological advancements in the field of on-board diagnostics of IC engines as follows: The present invention discloses a new method and circuit to detect a misfire and a partial misfire in a spark ignition engine by analyzing ion current signal in frequency domain with the help of digital signal processing techniques, storing the amplitude threshold data in the hardware for analysis cum comparison and subsequently inferring the misfire condition. Essential information is extracted in frequency domain by comparing ion current signal during 'Misfire and No-misfire condition" and appropriate threshold conditions are preset to differentiate misfire from normal combustion. The current subject matter enables overcoming the drawbacks of the known art and ensures the misfire is accurately detected thereby enabling reliable control and reduction of emissions for an engine especially of a small capacity.

Also, the sparking event is a very fast phenomenon with a maximum time of few milliseconds. Ion current signal flows through the circuit rapidly, the moment spark ends. Hence, in order to collect large set of data pertaining to the sparking event in a short duration, the frequency domain conversion units with very high sampling rates are utilised. The frequency band limiter modules are chosen based on the number of frequency bands identified by the frequency band determination unit. The frequency band limiter modules filter out signal within defined band so that the digital ion currents signal of respective frequency bands can be compared accurately. Also, the frequency bands are intelligently configured such that the digital ion current signal shows significant statistical variations in both misfire and No-misfire condition. The engine speed and the voltage on the primary side of the ignition coil are both used as reference to initiate the misfire detection by the frequency band limiter modules, the frequency domain conversion units, and the ion signal analyzer. These two signals are used to improve the reliability of the event detection system. If incase voltage of the primary side of the ignition coil is not detected due to some fault, engine speed will act as a trigger for the event detection system in real time.

Misfire detection based on ion current measurement will intimate user of the engine about the misfire events in the spark ignition engine of a vehicle in real time and by investigating and rectifying the causes of misfire, the performance of the vehicle is improved, thereby improving reliability, durability, mileage of the vehicle, and comfort offered to the user of the vehicle. Also, timely detection of misfire in the engine and rectification of the fault reduces catalyst and lambda performance degradation in the vehicle.

In addition to detecting the occurrence of the misfire, the event detection system of the present invention can perform knock detection, determine spark plug timing errors and perform spark duration measurement, perform analysis of quality of combustion in the engine, and aid in spark plug maintenance of the engine, using ion current sensing.

### LIST OF REFERENCE NUMERALS

100- Ignition system
101-primary side of ignition coil
102- battery positive terminal
103- secondary side of ignition coil
104-control unit
105-switching device
106- spark plug
107- ion current measurement circuit
200-Event detection system
201-Engine
202-Frequency band determination unit
203-Frequency band limiter modules
203a- Bandpass filter 1
203b- Bandpass filter 2
203c- Bandpass filter 3
204-Frequency domain conversion units
204a- FFT block 1
204b- FFT block 2
204c- FFT block 3
205-Amplitude database server
206-Ion signal analyzer
207-Notification unit

## Claims

1. An event detection system (200) of an engine (201), the event detection system (200) comprising:
an ion current measurement circuit (107) for measuring an ion current signal in an ignition coil (101 and 103) generated during a spark event in a spark plug (106);
a predetermined number (N) of frequency band limiter modules (203), the predetermined number (N) of frequency band limiter modules (203) are communicatively coupled to the ion current measurement circuit (107), for generating a predetermined number (N) of band filtered ion current signals; and
a predetermined number (N) of frequency domain conversion units (204), the predetermined number (N) of frequency domain conversion units (204) are communicatively coupled to the predetermined number of frequency band limiter modules (203), for converting the predetermined number of band filtered ion current signals in a time domain to a predetermined number (N) of digital ion current signals in a frequency domain; and
an ion signal analyzer (206), the ion signal analyzer (206) is communicatively coupled to the predetermined number (N) of frequency domain conversion units (204), and configured to compare an amplitude (A) of each of the predetermined number (N) of digital ion current signals with a threshold amplitude of each of the predetermined number (N) of digital ion current signals, for inferring occurrence of a misfire event in the engine (201).

2. The event detection system (200) as claimed in claim 1, further comprising a frequency band determination unit (202), the frequency band determination unit (202) is configured for determining a predetermined number (N) of frequency bands in the measured band filtered ion current signal, based on variation in voltage levels of the measured band filtered ion current signal, wherein each of the predetermined number (N) of frequency bands corresponds to each of the predetermined number (N) of frequency band limiter modules (203), wherein the predetermined number (N) is three.

3. The event detection system (200) as claimed in claim 2, wherein each of the predetermined number (N) of frequency band limiter modules (203) corresponds to each of the predetermined number (N) of band filtered ion current signals, and wherein each of the predetermined number (N) of band filtered ion current signals corresponds to each of the predetermined number (N) of digital ion current signals.

4. The event detection system (200) as claimed in claim 1, wherein each of the predetermined number (N) of frequency domain conversion units (204) performs a Fourier Transformation of each of the predetermined number (N) of band filtered ion current signals in time domain, generating the each of the predetermined number (N) of digital ion current signals in frequency domain, wherein the Fourier Transformation is achieved by a Fast Fourier Transform (FFT) algorithm being applied on each of the predetermined number of band filtered ion current signals.

5. The event detection system (200) as claimed in claim 1 further comprising a notification unit (207) for notifying a user of the engine (201) on occurrence of the misfire event when occurrence of the misfire event in the engine (201) is inferred by the ion signal analyzer (206), and an amplitude database server (205) for storing threshold amplitude values corresponding to frequency bands in the measured ion current signal.

6. The event detection system (200) as claimed in claim 1, wherein each of the predetermined number of frequency band limiter modules (203) is a bandpass filter having a corresponding low cut-off frequency and a corresponding high cut-off frequency.

7. A method for determining occurrence of a misfire event in an internal combustion (IC) engine (201), the method comprising steps of:
measuring, by an ion current measurement circuit (107), voltage levels of an ion current signal received from an ignition coil (101 and 103) of the IC engine (201) during a sparking event in a spark plug (106),
filtering, by a predetermined number (N) of frequency band limiter modules (203), the received ion current signal,
generating, by the predetermined number (N) of frequency band limiter modules (203), a predetermined number of band filtered ion current signals,
converting, by a predetermined number (N) of frequency domain conversion units (204), the predetermined number (N) of band filtered ion current signals in a time domain to a predetermined number (N) of digital ion current signals in a frequency domain,
comparing, by an ion signal analyzer (206), an amplitude of each of the predetermined number (N) of digital ion current signals with a threshold amplitude corresponding to the each of the predetermined number (N) of digital ion current signals, and,
determining, by the ion signal analyzer (206), an occurrence of the misfire event in the engine (201) based on the comparison.

8. The method as claimed in claim 7 further comprising, determining, by a frequency band determination unit (202), a predetermined number (N) of frequency bands in the measured ion current signal based on variation in voltage levels of the measured ion current signal, and storing, the threshold amplitude values in an amplitude database server (205), wherein the predetermined number (N) of frequency bands is three.

9. The method as claimed in claim 7, wherein each of the predetermined number (N) of frequency bands corresponds to each of the predetermined number (N) of frequency band limiter modules (203), each of the predetermined number (N) of frequency band limiter modules (203) corresponds to each of the predetermined number of band filtered ion current signals, and each of the predetermined number (N) of band filtered ion current signals corresponds to each of the predetermined number (N) of digital ion current signals.

10. The method as claimed in claim 7, wherein converting the predetermined number (N) of band filtered ion current signals in time domain to frequency domain comprises performing a Fourier Transformation, by the predetermined number (N) of frequency domain conversion units (204), of the each of the predetermined number (N) of band filtered ion current signals, wherein the Fourier Transformation is achieved by a Fast Fourier Transform (FFT) algorithm being applied on each of the predetermined number of band filtered ion current signals.

11. The method as claimed in claim 7, wherein comparing, by the ion signal analyzer (206), an amplitude of each of the predetermined number (N) of digital ion current signals with the threshold amplitude corresponding to the each of the predetermined number (N) of digital ion current signals comprises:
determining, by the ion signal analyzer (206), corresponding frequency bands of the each of the predetermined number (N) of digital ion current signals,
performing, by the ion signal analyzer (206), a lookup for the threshold amplitude values corresponding to the determined frequency bands in an amplitude database server (205), and
comparing, by the ion signal analyzer (206), the amplitude of the each of the predetermined number (N) of digital ion current signals with the corresponding threshold amplitude values.

12. The method as claimed in claim 7, further comprising notifying a user of the engine (201), by a notification unit (207), on the occurrence of the misfire event when the occurrence of the misfire event is determined by the ion signal analyzer (206).

13. The method as claimed in claim 11, further comprising storing, by the amplitude database server (205), event fault information history in an electronic control unit (ECU) (105) for engine diagnostic analysis.

## Patentansprüche

1. Ereigniserfassungssystem (200) eines Motors (201), wobei das Ereigniserfassungssystem (200) umfasst:
eine Ionenstrom-Messschaltung (107) zum Messen eines Ionenstromsignals in einer Zündspule (101 und 103), das während eines Zündereignisses in einer Zündkerze (106) erzeugt wird;
eine vorbestimmte Anzahl (N) von Frequenzbandbegrenzungsmodulen (203), wobei die vorbestimmte Anzahl (N) von Frequenzbandbegrenzungsmodulen (203) kommunikativ mit der Ionenstrom-Messschaltung (107) gekoppelt ist, um eine vorbestimmte Anzahl (N) von bandgefilterten Ionenstromsignalen zu erzeugen; und
eine vorbestimmte Anzahl (N) von Frequenzbereichsumwandlungseinheiten (204), wobei die vorbestimmte Anzahl (N) von Frequenzbereich-Umwandlungseinheiten (204) kommunikativ mit der vorbestimmten Anzahl von Frequenzband-Begrenzungsmodulen (203) gekoppelt ist, um die vorbestimmte Anzahl von bandgefilterten Ionenstromsignalen in einem Zeitbereich in eine vorbestimmte Anzahl (N) von digitalen Ionenstromsignalen in einem Frequenzbereich umzuwandeln; und
ein Ionen-Signalanalysator (206), wobei der Ionensignalanalysator (206) kommunikativ mit der vorbestimmten Anzahl (N) von Frequenzbereich-Umwandlungseinheiten (204) gekoppelt und so konfiguriert ist, dass er eine Amplitude (A) jedes der vorbestimmten Anzahl (N) von digitalen Ionenstromsignalen mit einer Schwellenamplitude jedes der vorbestimmten Anzahl (N) von digitalen Ionenstromsignalen vergleicht, um das Auftreten eines Fehlzündungsereignisses im Motor abzuleiten (201) abzuleiten.

2. Ereigniserkennungssystem (200) nach Anspruch 1, das ferner eine Frequenzbandbestimmungseinheit (202) umfasst, wobei die Frequenzband-Bestimmungseinheit (202) so konfiguriert ist, dass sie eine vorbestimmte Anzahl (N) von Frequenzbändern in dem gemessenen bandgefilterten Ionenstromsignal auf der Grundlage der Schwankungen der Spannungspegel des gemessenen bandgefilterten Ionenstromsignals bestimmt, wobei jedes der vorbestimmten Anzahl (N) von Frequenzbändern jedem der vorbestimmten Anzahl (N) von Frequenzband-Begrenzungsmodulen (203) entspricht, wobei die vorbestimmte Anzahl (N) drei ist.

3. Ereigniserfassungssystem (200) nach Anspruch 2, wobei jedes der vorbestimmten Anzahl (N) von Frequenzbandbegrenzungsmodulen (203) jedem der vorbestimmten Anzahl (N) von bandgefilterten Ionenstromsignalen entspricht und wobei jedes der vorbestimmten Anzahl (N) von bandgefilterten Ionenstromsignalen jedem der vorbestimmten Anzahl (N) von digitalen Ionenstromsignalen entspricht.

4. Ereigniserkennungssystem (200) gemäß Anspruch 1, wobei jede der vorbestimmten Anzahl (N) von Frequenzbereich-Umwandlungseinheiten (204) eine Fourier-Transformation jedes der vorbestimmten Anzahl (N) bandgefilterten Ionenstromsignale im Zeitbereich durchführt und dabei jedes der vorbestimmten Anzahl (N) digitaler Ionenstromsignale im Frequenzbereich erzeugt, wobei die Fourier-Transformation durch einen Fast-Fourier-Transformationsalgorithmus (FFT) erreicht wird, der auf jedes der vorbestimmten Anzahl bandgefilterten Ionenstromsignale angewendet wird.

5. Ereigniserkennungssystem (200) nach Anspruch 1, das ferner eine Benachrichtigungseinheit (207) umfasst, um einen Benutzer des Motors (201) über das Auftreten des Fehlzündungsereignisses zu benachrichtigen, wenn das Auftreten des Fehlzündungsereignisses im Motor (201) durch den Ionensignalanalysator (206) abgeleitet wird, und einen Amplitudendatenbankserver (205) zum Speichern von Schwellenamplitudenwerten, die den Frequenzbändern im gemessenen Ionenstromsignal entsprechen.

6. Ereigniserkennungssystem (200) nach Anspruch 1, wobei jedes der vorbestimmten Anzahl von Frequenzbandbegrenzungsmodulen (203) ein Bandpassfilter mit einer entsprechenden niedrigen Grenzfrequenz und einer entsprechenden hohen Grenzfrequenz ist.

7. Verfahren zum Bestimmen des Auftretens eines Fehlzündungsereignisses in einem Verbrennungsmotor (201), wobei das Verfahren die folgenden Schritte umfasst:
Messen der Spannungspegel eines Ionenstromsignals, das von einer Zündspule (101 und 103) des Verbrennungsmotors (201) während eines Zündereignisses in einer Zündkerze (106) empfangen wird, durch eine Ionenstrom-Messschaltung (107) ,
Filtern des empfangenen Ionenstromsignals durch eine vorbestimmte Anzahl (N) von Frequenzbandbegrenzungsmodulen (203),
Erzeugen einer vorbestimmten Anzahl von bandgefilterten Ionenstromsignalen durch die vorbestimmte Anzahl (N) von Frequenzbandbegrenzungsmodulen (203),
Umwandeln der vorbestimmten Anzahl (N) von bandgefilterten Ionenstromsignalen im Zeitbereich durch eine vorbestimmte Anzahl (N) von Frequenzbereichsumwandlungseinheiten (204) die vorbestimmte Anzahl (N) bandgefilterter Ionenstromsignale in einem Zeitbereich in eine vorbestimmte Anzahl (N) digitaler Ionenstromsignale in einem Frequenzbereich,
Vergleichen einer Amplitude jedes der vorbestimmten Anzahl (N) digitaler Ionenstromsignale mit einer Schwellenamplitude, die jedem der vorbestimmten Anzahl (N) digitaler Ionenstromsignale entspricht, durch einen Ionenstromsignalanalysator (206), einer Amplitude jedes der vorbestimmten Anzahl (N) digitaler Ionenstromsignale mit einer Schwellenamplitude, die jedem der vorbestimmten Anzahl (N) digitaler Ionenstromsignale entspricht, und Bestimmen eines Auftretens des Fehlzündungsereignisses im Motor (201) durch den Ionensignalanalysator (206) auf der Grundlage des Vergleichs.

8. Verfahren nach Anspruch 7, das ferner umfasst: Bestimmen einer vorbestimmten Anzahl (N) von Frequenzbändern in dem gemessenen Ionenstromsignal durch eine Frequenzbandbestimmungseinheit (202) auf der Grundlage der Schwankung der Spannungspegel des gemessenen Ionenstromsignals und Speichern der Schwellenamplitudenwerte in einem Amplitudendatenbankserver (205), wobei die vorbestimmte Anzahl (N) von Frequenzbändern drei beträgt.

9. Verfahren nach Anspruch 7, wobei jedes der vorbestimmten Anzahl (N) von Frequenzbändern jedem der vorbestimmten Anzahl (N) von Frequenzbandbegrenzungsmodulen (203) entspricht, jedes der vorbestimmten Anzahl (N) von Frequenzbandbegrenzungsmodulen (203) jedem der vorbestimmten Anzahl von bandgefilterten Ionenstromsignalen entspricht und jedes der vorbestimmten Anzahl (N) von bandgefilterten Ionenstromsignalen jedem der vorbestimmten Anzahl (N) von digitalen Ionenstromsignalen entspricht.

10. Verfahren nach Anspruch 7, wobei das Umwandeln der vorbestimmten Anzahl (N) von bandgefilterten Ionenstromsignalen im Zeitbereich in den Frequenzbereich das Durchführen einer Fourier-Transformation durch die vorbestimmte Anzahl (N) von Frequenzbereich-Umwandlungseinheiten (204) umfasst, wobei die Fourier-Transformation durch Anwendung eines Fast-Fourier-Transformationsalgorithmus (FFT) auf jedes der vorbestimmten Anzahl (N) bandgefilterten Ionenstromsignale erreicht wird.

11. Verfahren nach Anspruch 7, wobei das Vergleichen einer Amplitude jedes der vorbestimmten Anzahl (N) digitaler Ionenstromsignale mit der Schwellenamplitude, die jedem der vorbestimmten Anzahl (N) digitaler Ionenstromsignale entspricht, durch den Ionensignalanalysator (206) umfasst:
das Bestimmen der entsprechenden Frequenzbänder jedes der vorbestimmten Anzahl (N) digitaler Ionenstromsignale durch den Ionensignalanalysator (206),
das Durchführen einer Suche nach den Schwellenamplitudenwerten, die den bestimmten Frequenzbändern entsprechen, in einem Amplitudendatenbankserver (205 durch den Ionensignalanalysator (206) und
das Vergleichen der Amplitude jedes der vorbestimmten Anzahl (N) digitaler Ionenstromsignale mit den entsprechenden Schwellenamplitudenwerten durch den Ionensignalanalysator (206). der Amplitude jedes der vorbestimmten Anzahl (N) digitaler Ionenstromsignale mit den entsprechenden Schwellenamplitudenwerten.

12. Verfahren nach Anspruch 7, das ferner umfasst, dass ein Benutzer des Motors (201) durch eine Benachrichtigungseinheit (207) über das Auftreten des Fehlzündungsereignisses benachrichtigt wird, wenn das Auftreten des Fehlzündungsereignisses durch den Ionensignalanalysator (206) bestimmt wird.

13. Verfahren nach Anspruch 11, das ferner umfasst, dass der Amplitudendatenbankserver (205) die Ereignisfehlerinformationshistorie in einer elektronischen Steuereinheit (ECU) (105) für die Motordiagnoseanalyse speichert.

## Revendications

1. Système de détection d'événements (200) d'un moteur (201), le système de détection d'événements (200) comprenant :
un circuit de mesure de courant ionique (107) pour mesurer un signal de courant ionique dans une bobine d'allumage (101 et 103) généré pendant un événement d'étincelle dans une bougie d'allumage (106) ;
un nombre prédéterminé (N) de modules limiteurs de bande de fréquence (203), le nombre prédéterminé (N) de modules limiteurs de bande de fréquence (203) étant couplés de manière communicative au circuit de mesure de courant ionique (107), pour générer un nombre prédéterminé (N) de signaux de courant ionique filtrés en bande ; et
un nombre prédéterminé (N) d'unités de conversion de domaine fréquentiel (204), le nombre prédéterminé (N) d'unités de conversion de domaine fréquentiel (204) étant couplées de manière communicative au nombre prédéterminé de modules limiteurs de bande de fréquences (203), afin de convertir le nombre prédéterminé de signaux de courant ionique filtrés en bande dans un domaine temporel en un nombre prédéterminé (N) de signaux de courant ionique numériques dans un domaine fréquentiel ; et
un analyseur de signaux ioniques (206), l'analyseur de signaux ioniques (206) étant couplé de manière communicative au nombre prédéterminé (N) d'unités de conversion du domaine fréquentiel (204) et configuré pour comparer une amplitude (A) de chacun du nombre prédéterminé (N) de signaux de courant ionique numériques à une amplitude seuil de chacun du nombre prédéterminé (N) de signaux de courant ionique numériques, afin de déduire la survenue d'un événement de raté d'allumage dans le moteur (201).

2. Système de détection d'événements (200) selon la revendication 1, comprenant en outre une unité de détermination de bande de fréquences (202), l'unité de détermination de bande de fréquence (202) étant configurée pour déterminer un nombre prédéterminé (N) de bandes de fréquence dans le signal de courant ionique filtré par bande mesuré, sur la base de la variation des niveaux de tension du signal de courant ionique filtré par bande mesuré, dans lequel chacune des bandes de fréquence du nombre prédéterminé (N) correspond à chacun des modules limiteurs de bande de fréquence (203) du nombre prédéterminé (N), dans lequel le nombre prédéterminé (N) est égal à trois.

3. Système de détection d'événements (200) selon la revendication 2, dans lequel chacun du nombre prédéterminé (N) de modules limiteurs de bande de fréquences (203) correspond à chacun du nombre prédéterminé (N) de signaux de courant ionique filtrés par bande, et dans lequel chacun du nombre prédéterminé (N) de signaux de courant ionique filtrés par bande correspond à chacun du nombre prédéterminé (N) de signaux de courant ionique numériques.

4. Système de détection d'événements (200) selon la revendication 1, dans lequel chacune des unités de conversion dans le domaine fréquentiel en nombre prédéterminé (N) (204) effectue une transformation de Fourier de chacun des signaux de courant ionique filtrés par bande dans le domaine temporel, générant chacun des signaux de courant ionique numériques dans le domaine fréquentiel, dans lequel la transformation de Fourier est réalisée par un algorithme de transformation de Fourier rapide (FFT) appliqué à chacun des signaux de courant ionique filtrés par bande.

5. Système de détection d'événements (200) selon la revendication 1, comprenant en outre une unité de notification (207) pour notifier à un utilisateur du moteur (201) la survenue de l'événement de raté d'allumage lorsque la survenue de l'événement de raté d'allumage dans le moteur (201) est déduite par l'analyseur de signaux ioniques (206), et un serveur de base de données d'amplitude (205) pour stocker des valeurs d'amplitude seuil correspondant à des bandes de fréquences dans le signal de courant ionique mesuré.

6. Système de détection d'événements (200) selon la revendication 1, dans lequel chacun des modules limiteurs de bande de fréquences (203) prédéterminés est un filtre passe-bande ayant une fréquence de coupure basse correspondante et une fréquence de coupure haute correspondante.

7. Procédé pour déterminer l'occurrence d'un événement de raté d'allumage dans un moteur à combustion interne (IC) (201), le procédé comprenant les étapes suivantes :
mesurer, à l'aide d'un circuit de mesure de courant ionique (107), les niveaux de tension d'un signal de courant ionique reçu d'une bobine d'allumage (101 et 103) du moteur IC (201) pendant un événement d'étincelle dans une bougie d'allumage (106) ,
filtrer, à l'aide d'un nombre prédéterminé (N) de modules limiteurs de bande de fréquence (203), le signal de courant ionique reçu,
générer, à l'aide du nombre prédéterminé (N) de modules limiteurs de bande de fréquence (203), un nombre prédéterminé de signaux de courant ionique filtrés par bande,
convertir, à l'aide d'un nombre prédéterminé (N) d'unités de conversion de domaine fréquentiel (204), le nombre prédéterminé (N) de signaux de courant ionique filtrés en bande dans un domaine temporel en un nombre prédéterminé (N) de signaux de courant ionique numériques dans un domaine fréquentiel,
comparer, à l'aide d'un analyseur de signaux ioniques (206), l'amplitude de chacun des signaux de courant ionique numériques en nombre prédéterminé (N) avec une amplitude seuil correspondant à chacun des signaux de courant ionique numériques en nombre prédéterminé (N), et
déterminer, à l'aide de l'analyseur de signaux ioniques (206), la survenue d'un événement de raté d'allumage dans le moteur (201) sur la base de la comparaison.

8. Procédé selon la revendication 7, comprenant en outre la détermination, par une unité de détermination de bande de fréquences (202), d'un nombre prédéterminé (N) de bandes de fréquences dans le signal de courant ionique mesuré sur la base de la variation des niveaux de tension du signal de courant ionique mesuré, et le stockage des valeurs d'amplitude seuil dans un serveur de base de données d'amplitude (205), dans lequel le nombre prédéterminé (N) de bandes de fréquences est égal à trois.

9. Procédé selon la revendication 7, dans lequel chacune des bandes de fréquences du nombre prédéterminé (N) correspond à chacun des modules limiteurs de bande de fréquences (203) du nombre prédéterminé (N), chacun des modules limiteurs de bande de fréquence (203) du nombre prédéterminé (N) correspondant à chacun des signaux de courant ionique filtrés par bande du nombre prédéterminé, et chacun des signaux de courant ionique filtrés par bande du nombre prédéterminé (N) correspondant à chacun des signaux de courant ionique numériques du nombre prédéterminé (N).

10. Procédé selon la revendication 7, dans lequel la conversion du nombre prédéterminé (N) de signaux de courant ionique filtrés par bande dans le domaine temporel vers le domaine fréquentiel comprend la réalisation d'une transformation de Fourier, par le nombre prédéterminé (N) d'unités de conversion dans le domaine fréquentiel (204), de chacun des signaux de courant ionique filtrés par bande du nombre prédéterminé (N), dans lequel la transformation de Fourier est réalisée par un algorithme de transformation de Fourier rapide (FFT) appliqué à chacun des signaux de courant ionique filtrés par bande du nombre prédéterminé.

11. Procédé selon la revendication 7, dans lequel la comparaison, par l'analyseur de signaux ioniques (206), d'une amplitude de chacun des signaux de courant ionique numériques en nombre prédéterminé (N) avec l'amplitude seuil correspondant à chacun des signaux de courant ionique numériques en nombre prédéterminé (N) comprend :
la détermination, par l'analyseur de signaux ioniques (206), des bandes de fréquences correspondantes de chacun des signaux numériques de courant ionique du nombre prédéterminé (N),
la recherche, par l'analyseur de signaux ioniques (206), des valeurs d'amplitude seuil correspondant aux bandes de fréquences déterminées dans un serveur de base de données d'amplitudes (205), et
la comparaison, par l'analyseur de signaux ioniques (206), l'amplitude de chacun des signaux numériques de courant ionique du nombre prédéterminé (N) avec les valeurs d'amplitude seuil correspondantes.

12. Procédé selon la revendication 7, comprenant en outre la notification à un utilisateur du moteur (201), par une unité de notification (207), de la survenue de l'événement de raté d'allumage lorsque la survenue de l'événement de raté d'allumage est déterminée par l'analyseur de signaux ioniques (206).

13. Procédé selon la revendication 11, comprenant en outre le stockage, par le serveur de base de données d'amplitude (205), de l'historique des informations de défaut d'événement dans une unité de commande électronique (ECU) (105) pour l'analyse de diagnostic du moteur.
